# EUROPEAN PATENT SPECIFICATION

(11) **EP 2 523 067 B1**
(45) Date of publication and mention of the grant of the patent: **17.04.2019**
(21) Application number: 12165352.1
(22) Date of filing: 24.04.2012
(51) Int. Cl.: G06F 1/16, G06F 3/044

(54) **Mobile terminal**
Mobiles Endgerät
Terminal mobile

(30) Priority: 13.05.2011 KR 20110045252
(43) Date of publication of application: 14.11.2012
(73) Proprietor: LG Electronics Inc., Yeongdeungpo-Gu Seoul 07336 (KR)
(72) Inventor: Yang, Seungsu, 153-801 Seoul (KR); Chae, Soohyun, 153-801 Seoul (KR); Kang, Kwonjin, 153-801 Seoul (KR); Kim, Hyogyu, 153-801 Seoul (KR); Shin, Seungyong, 153-801 Seoul (KR)
(74) Representative: Cabinet Plasseraud

(56) References cited:
- US-A1- 2010 103 138
- US-A1- 2011 012 845

## Description

### BACKGROUND OF THE INVENTION

### Field of the Invention

The present invention relates to a mobile terminal. Although the present invention is suitable for a wide scope of applications, it is particularly suitable for extending a view area of a display unit.

### Discussion of the Related Art

Generally, terminals can be classified into mobile terminals and stationary terminals according to a presence or non-presence of mobility. In addition, the mobile terminals can be further classified into handheld terminals and vehicle mount terminals according to availability for hand-carry

Recently, a touch screen or a touchpad tends to be additionally provided to a display unit, which is an output unit configured to display visual information in the above-described terminal, thereby enabling a user's input signal to be received via the display unit in order to facilitate a user to manipulate the terminal. However, since the related art mobile terminal includes an ITO (Indium Tin Oxide) film having high brittleness, when a touchscreen or a touchpad is bent, the ITO film is broken to lose or weaken its electric conductivity. Thus, the ITO film of the related art causes a problem that the mechanical strength against the bending of the touchscreen or touchpad is weak. As the touchscreen is not bent due to this problem, a bezel area provided to an edge part of a window panel arranged on the touchscreen should be formed wide to prevent an electrode part of the touchscreen from being externally exposed, whereby a view area is reduced. The document US 2011/012845 discloses an electronic device having a touch screen display that has a touch sensor structure that determines the location at which external objects touch the display.
The document US 2010/103138 discloses a manufacture method and structure of a curved capacitance panel.

### SUMMARY OF THE INVENTION

Accordingly, the present invention is directed to a mobile terminal that substantially obviates one or more problems due to limitations and disadvantages of the related art.

An object of the present invention is to provide a mobile terminal, by which a view area can be extended in a manner of minimizing a bezel area of a display unit.

Another object of the present invention is to provide a mobile terminal, by which a user is further facilitated to use the mobile terminal in a manner of providing an additional touch area to a lateral side part of a front case of the mobile terminal

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to claim 1 is provided. Further embodiments are described in dependent claims 2 to 3.

The matter for which protection is sought is defined by the appended claims. Embodiments which do not fall within the scope of the claims do not describe part of the present invention.

Accordingly, the present invention provides the following effects and/or advantages.

First of all, the present invention extends a view area of a display unit in a mobile terminal.

Secondly, the present invention facilitates a user to use a mobile terminal in a manner of providing an additional touch area to a lateral side part of a front case of the mobile terminal.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal in accordance with an embodiment of the present invention;
FIG. 2A illustrates a front perspective view of a mobile terminal related to a preferred embodiment of the present invention;
FIG. 2B illustrates a back side perspective view of a mobile terminal related to a preferred embodiment of the present invention;
FIG. 3A and FIG. 3B are schematic cross-sectional diagrams of a display unit of a mobile terminal according to a related art;
FIG. 5 is a schematic cross-sectional diagram of a front part or a rear part of a touch panel according to a 1^{st} embodiment of the present invention;
FIG. 6 is a schematic cross-sectional diagram of a front part or a rear part of a touch panel according to a 2^{nd} embodiment of the present invention;
FIG. 7 is a schematic cross-sectional diagram of a lateral side part of a touch panel according to a 1^{st} embodiment of the present invention;
FIG. 8 is a schematic cross-sectional diagram of a lateral side part of a touch panel according to a 2^{nd} embodiment of the present invention;
FIG. 9 is a schematic cross-sectional diagram of an additional touch area (TA) according to a 1^{st} embodiment of the present invention;
FIG. 10 is a schematic cross-sectional diagram of an additional touch area (TA) according to a 2^{nd} embodiment of the present invention;
FIG. 11 is a schematic cross-sectional diagram of an additional touch area (TA) according to a 3^{rd} embodiment of the present invention;
FIG. 12A and FIG. 12B are schematic diagrams for illustrating a size difference between a bezel area of a display unit in a related art mobile terminal and a bezel area (BZ) of a display unit 200 in a mobile terminal according to the present invention; and
FIG. 13A and FIG. 13B are schematic diagrams for illustrating a difference between a touch scheme via a touch panel in a related art mobile terminal and a touch scheme via a touch panel 230 in a mobile terminal according to the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The mobile terminal described in the specification can include cellular phone, smart phone, laptop computer, digital broadcasting terminal, PDA (Personal Digital Assistants), PMP (Portable Multimedia Player), navigation and so on. However, it will be apparent of to persons in this field of art that a configuration of the embodiment described in the specification is applicable to stationary terminals, such as digital TV and desk top computer, if cases are excluded, in which the embodiment is applicable only to the mobile terminal. Moreover, in this specification, a front side or a front side direction may mean a top part of a mobile terminal or a direction toward the top part, while a rear side or a rear side direction may mean a bottom part of a mobile terminal or a direction toward the bottom part.

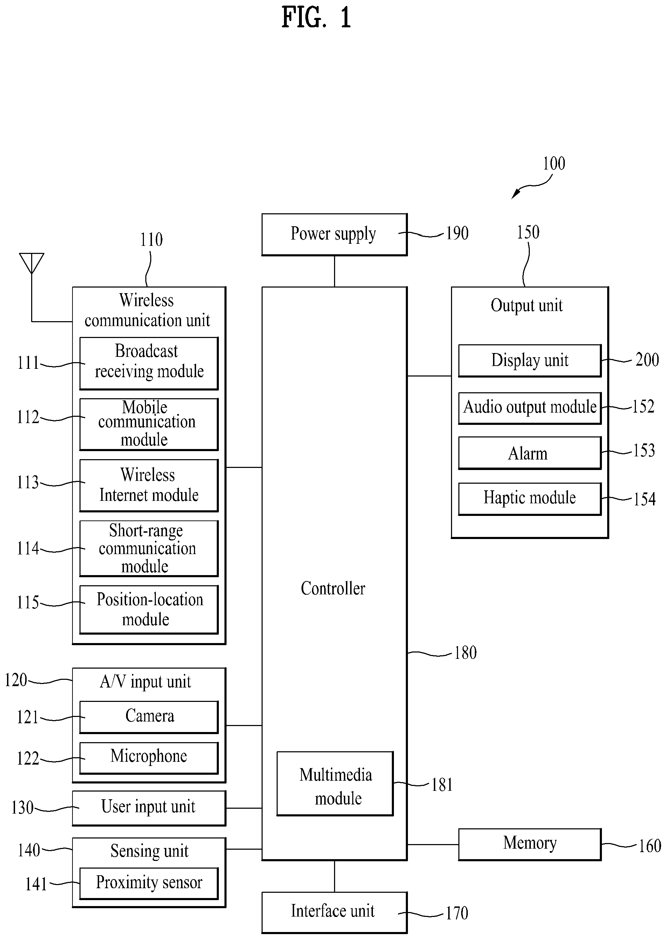

FIG. 1 is a block diagram of a mobile terminal 100 in accordance with an embodiment of the present invention.

FIG. 1 shows the mobile terminal 100 according to one embodiment of the present invention includes a wireless communication unit 110, an AN (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

Elements of the present invention will be described one by one.

The wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal.

The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. In addition, the broadcast associated information can be provided via a mobile communication network. In this instance, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this instance, the wireless Internet technology can include WLAN (Wireless LAN) (Wi-Fi), Wibro (Wireless broadband), Wimax (World Interoperability for Microwave Access), HSDPA (High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Meanwhile, the AN (audio/video) input unit 120 is configured to input an audio signal or a video signal and can include a camera module 121, a microphone module 122 and the like. The camera module 121 processes an image frame of a still or moving picture obtained by an image sensor in a video call mode or a photographing mode. In addition, the processed image frame can be displayed on the display 200.

The image frame processed by the camera module 121 is stored in the memory 160 or can be externally transmitted via the wireless communication unit 110. At least two camera modules 121 can be provided according to a configuration type of the terminal.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad such as static pressure/capacitance, a jog wheel and a jog switch. A specific example is one in which the user input unit 130 is configured as a touchpad in cooperation with a display, which will be described in more detail below.

The sensing unit 140 detects such a current configuration of the mobile terminal 100 as an open/closed configuration of the mobile terminal 100, a location of the mobile terminal 100, a presence or non-presence of user contact, and the like and then generates a sensing signal for controlling an operation of the mobile terminal 100.

For instance, if the mobile terminal 100 is a slide phone type, the sensing unit 140 is able to sense whether a slide phone is open or closed. In addition, the sensing unit 140 is responsible for sensing functions related to a presence or non-presence of power supply of the power supply 190, an external device loading of the interface unit 170 and the like.

Meanwhile, the sensing unit 140 may include a proximity sensor 141.

The output unit 150 is configured to output an audio signal, a video signal and/or an alarm signal. In addition, the output unit 150 may include the display 200, an audio output module 152, an alarm output module 153, a haptic module 154 and the like.

The display 200 is typically implemented to visually display (output) information associated with the mobile terminal 100. For instance, if the mobile terminal is operating in a phone call mode, the display will generally provide a user interface (Ul) or graphical user interface (GUI) which includes information associated with placing, conducting, and terminating a phone call.

The display 200 may be implemented using known display technologies including, for example, a display display (LCD), a thin film transistor-display display (TFT-LCD), an organic light-emitting diode display (OLED), a flexible display and a three-dimensional display. The mobile terminal 100 may include one or more of such displays.

Some of the displays can have a transparent or light-transmitting configuration to be externally viewable therethrough. In addition, such a display can be called a light-transmitting display. TOLED (transparent OLED), AMOLED (active matrix OLED) and the like are representative examples of the light-transmitting displays. In addition, a rear structure of the display can have the light-transmitting configuration as well. Above structure enables the user to see things positioned in rear of a terminal body through a region of the display unit 200 of the terminal body occupies.

According to an implementation type of the mobile terminal 100, at least two displays 200 can exist in the mobile terminal 100. For instance, a plurality of displays can be arranged on one face of the mobile terminal 100 in a manner of being spaced apart from each other or being built in one body. For another instance, a plurality of displays can be arranged on different faces of the mobile terminal 100, respectively.

In case that the display 200 and a sensor for detecting a touch action (hereinafter called 'touch sensor') of such a pointer as a user's finger, a pen and the like configures a mutual layer structure (hereinafter called 'touchscreen'), it is able to use the display 200 as an input device as well as an output device. In this instance, the touch sensor can be configured with a touch film, a touch sheet, a touchpad or the like for example.

The touch sensor can be configured to convert a pressure applied to a specific portion of the display 200 or a variation of a capacitance generated from a specific portion of the display 200 to an electric input signal. Moreover, it is able to configure the touch sensor to detect a pressure of a touch as well as a touched position or size.

The touch sensor may be configured to convert such a variation as a pressure applied to a specific portion of the display unit 200 or an electrostatic capacitance generated from a specific portion of the display unit 200 to an electric input signal. Moreover, the touch sensor may be configured to detect a pressure of an applied touch as well as a touched position and a touched size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know which portion of the display 200 is touched.

A proximity sensor 141 can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this instance, the touchscreen (touch sensor) can be classified as the proximity sensor.

In the following description, for clarity, an action that a pointer approaches without contacting with the touchscreen to be recognized as located on the touchscreen is named 'proximity touch'. In addition, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor 141 detects a proximity touch and a proximity touch pattern (e.g., a proximity touch distance, a proximity touch duration, a proximity touch position, a proximity touch shift state, etc.). In addition, information corresponding to the detected proximity touch action and the detected proximity touch pattern can be output to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be output via the display 200 or the audio output unit 152. Hence, the display 200 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be output in a manner of being synthesized together or can be output in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory 160 can store programs for the processing and control of the controller 180 and is also able to perform a function for temporary storage of input/output data (e.g., phonebook data, message data, still picture data, moving picture data, etc.). Moreover, the memory 160 can store data of various patterns of vibration and sound output in case of the touch input to the touchscreen.

The memory 160 may include at least one storage medium of such a type as a flash memory type, a hard disk type, a multimedia card micro type, a card type memory (e.g., SD memory, XD memory, etc.), RAM, SRAM(Static Random Access Memory), ROM, EEPROM(Electrically Erasable Programmable Read-Only Memory), PROM(Programmable Read-Only Memory) and the like. Moreover, the mobile terminal 100 is able to operate a web storage that performs a storage function of the memory 160 on internet.

The interface unit 170 plays a role as an interface with every external device connected to the mobile terminal 100. For instance, the external devices include a wire/wireless headset, an external electricity charger, a wire/wireless data port, a card socket (e.g., memory card socket, SIM/UIM card socket, etc.), audio I/O (input/output) terminals, video I/O (input/output) terminals, earphones, etc. The interface unit 170 receives data from the external device or is supplied with power. The interface unit 170 then delivers the received data or the supplied power to the corresponding component within the mobile terminal 100 or transmits data within the portable terminal 100 to the corresponding external device.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 normally controls overall operations of the mobile terminal 100. For instance, the controller 180 performs the control and processing related to speech call, data communication, video call and the like. In addition, the controller 180 can be provided with a multimedia play module 181 for multimedia playback as well. The multimedia playback module 180 can be configured as hardware within the controller 180 or software separate from the controller 180.

The controller 180 is able to perform a pattern recognizing processing for recognizing a handwriting input or a drawing input performed on the touchscreen into a character and an image, respectively.

The power supply 190 receives an external and/or internal power source and then supplies power required for operations of the respective components, under the control of the controller 180.

Various embodiments described herein may be implemented in a computer-readable medium using, for example, computer software, hardware, or some combination thereof.

For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in the memory 160, and executed by the controller 180.

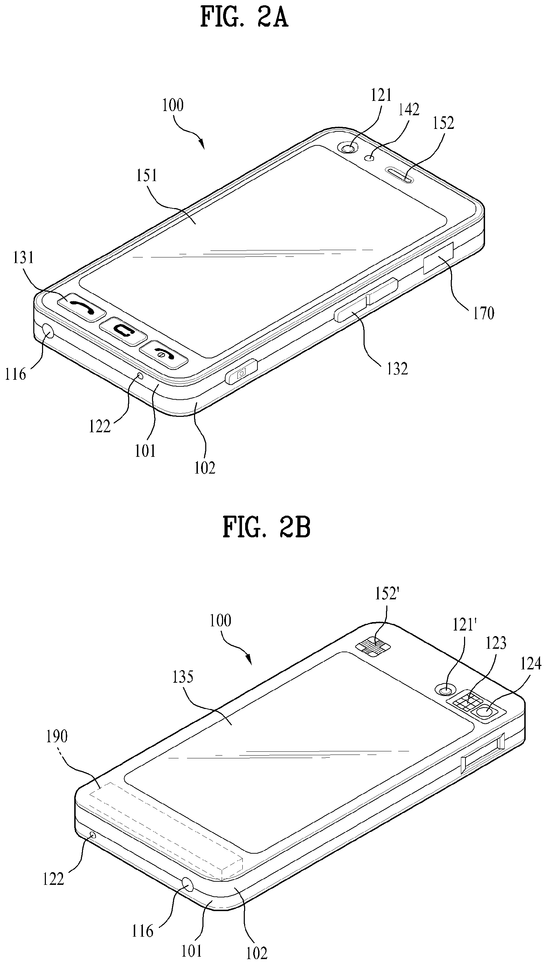

FIG. 2A illustrates a front perspective view of a mobile terminal related to a preferred embodiment of the present invention.

The mobile terminal 100 disclosed herein has a bar type terminal body. However, the present invention is not limited to this, but is applicable to various types of structures of the mobile terminal, such as a slide type, a folder type, a swing type, a swivel type and so on, in which two or more than two bodies are coupled to allow relative motions.

The body includes a case (casing, housing, cover, and so on) which forms an exterior thereof. In the embodiment, the case includes a front case 101 and a rear case 102. Various electronic components are mounted in a space formed between the front case 101 and the rear case 102. There can be at least one intermediate case between the front case 101 and the rear case 102, additionally.

The cases can be injection moldings of synthetic resin or formed of a metal, such as stainless steel or titanium Ti.

The terminal body, mostly the front case 101, can have a display unit 200, a sound output unit 152, a camera 121, user input units 130/131 and 132, a microphone 122, an interface 170 arranged thereon.

The display unit 200 occupies most of a main surface of the front case 101. The sound output unit 152 and the camera 121 are arranged at a region adjacent to one end of the display unit 200 and the user input unit 132 and the microphone 122 are arranged at a region adjacent to the other end of the display unit 200. The user input unit 132 and the interface 170 can be arranged at sides of the front case 101 and the rear case 102.

The user input unit 130, to be handled for receiving an order to control operation of the mobile terminal 100, can include a plurality of handling units 131 and 132. The handling units 131 and 132, called as a handling portion collectively, can be of any type as far as it can be handled in a tactile manner. Contents to be received by the first and second handling units 131 and 132 can be set in a variety of ways. For an example, the first handling unit 131 can receive orders, such as start, end and scroll, and the second handling unit 132 can receive orders such as control of sound volume from the sound output unit 152, and shifting to a touch sensing mode of the display unit 200, and so on.

FIG. 2B illustrates a backside perspective view of a mobile terminal shown in FIG. 2A.

Referring to FIG. 2B, a camera 121' can be mounted to a backside of the terminal body, i.e., on the rear case 102, additionally. The camera 121' has a picture taking direction opposite to the camera 121 (see FIG. 2) actually, and can be a camera having pixels different from the camera 121.

For an example, it is preferable that the camera 121 has low density of pixels such that taking and transmitting a picture of a face of the user to an opposite side can be done properly, and the camera 121' has high density of pixels since there are many cases when the camera 121' takes a general object and stores the picture without transmission directly. The cameras 121 and 121' can be mounted to the terminal body, rotatably or able to pop-up.

A flash 123 and a mirror 124 are arranged adjacent to the camera 121', additionally. The flash 123 illuminates the object when the camera 121' takes the object. The mirror 124 enables the user to see the user's face or so on when the user takes a picture of the user with the user's camera 121'.

A sound output unit 152' can be mounted to the backside of the terminal body, additionally. The sound output unit 152' can implement a stereo function together with the sound output unit 152 (see FIG. 2A), and can be used for implementing a speaker phone mode.

Besides an antenna for communication, the terminal body at a side thereof can have a broadcasting signal reception antenna 124, additionally. The antenna 124 in the broadcast receiving module 111 (see FIG. 1) can be mounted to be able to pull out of the terminal body.

The terminal body has a power supply unit 190 mounted thereto for supplying power to the mobile terminal 100. The power supply unit 190 can be built-in the terminal body or detachably mounted to an outside of the terminal body.

The rear case 102 can have a touch pad 135 mounted thereto additionally for sensing a touch thereto. Alike the display unit 200, the touch pad 135 can also be a light transmission type. In this instance, if the display unit 200 is configured to provide visual information to both sides of the display unit 200, the visual information can be sensed through the touch pad 135. All information to be provided to the both sides can be controlled by the touch pad 135. Different from this, a display unit can be mounted to the touch pad 135 additionally, to arrange a touch screen on the rear case 102, too.

The touch pad 135 is operative in relation to the display unit 200 on the front case 101. The touch pad 135 can be arranged in rear of the display unit 200 in parallel thereto. The touch pad 135 can have a size the same or smaller than the display unit 200.

In the following description, a mobile terminal including at least one of the aforementioned components according to the present invention will be explained. Prior to the description of the mobile terminal according to the present invention, a mobile terminal of the related art shall be schematically explained. In the following description, with reference to FIG. 2A, when a mobile terminal is set upright, a part corresponding to a top part and a direction corresponding to a direction toward the top part shall be named a front side and a front side direction and a part corresponding to a bottom part and a direction corresponding to a direction toward the bottom part shall be named a bottom side and a bottom side direction, respectively.

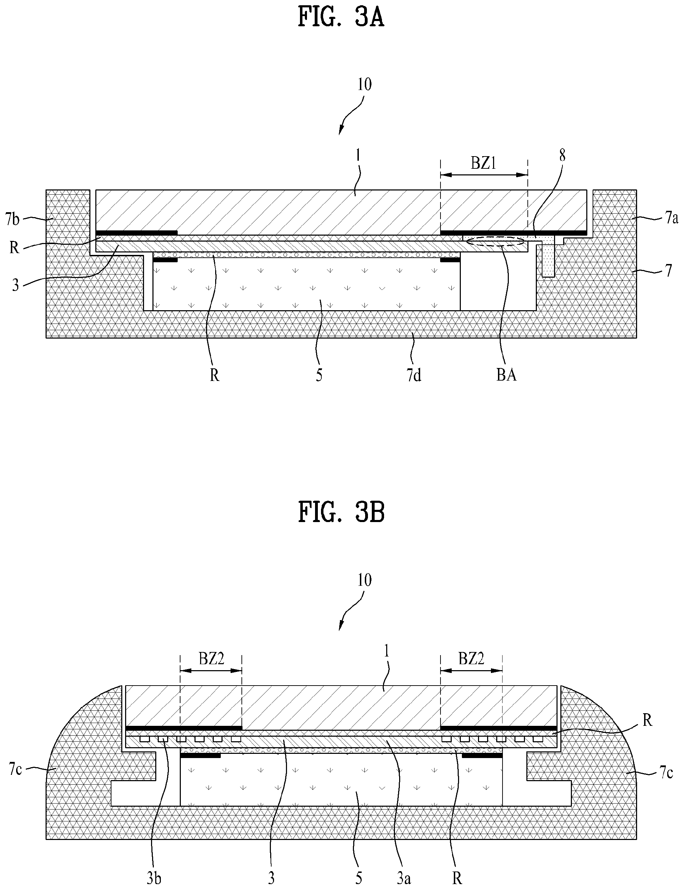

FIG. 3A and FIG. 3B are schematic cross-sectional diagrams of a display unit 10 of a mobile terminal according to a related art. In particular, FIG. 3A schematically shows a front side part or a rear side part of a display unit 10 included in a related art mobile terminal and FIG. 3B schematically shows a lateral side part of the display unit 10 included in the related art mobile terminal.

Referring to FIG. 3A, a display unit 10 of a related art mobile terminal consists of a window panel 1, a touch panel 3 including an ITO film attached to a bottom of the window panel 1 via a light-transmittive resin R, an FPCB 8 electrically connected to a front side part of the touch panel 3, and a panel of the display unit 10 arranged under the touch panel 3.

In particular, a flat bonding area BA should be provided to the front side part of the touch panel 3 to enable the FPCB 8 to optimally receive an input signal input via the touch panel 3. This is because an input signal via the touch panel 3 may not be forwarded to the FPCB 8 quickly or correctly if the flatness of the bonding area BA is low.

Like the related art, if the bonding area BA to embed the FPCB 8 is provided to one surface of the front or rear side part of the touch panel 3, it may be disadvantageous in that a bezel area BZ1 having a view area VA removed can not be formed wide on the window panel to enhance the exterior beauty of the mobile terminal by preventing the FPCB 8 and the bonding area from being externally exposed. For reference, the view area (VA) is the area for actually providing a user with visual information through the mobile terminal and the bezel area BZ is a dead area failing to provide a user with visual information actually despite being provided to the window panel 1 and/or the display panel 5.

Referring to FIG. 3B, as an electrode part 3c is arranged on an edge of the touch panel 3 included in the related art mobile terminal, in order to enhance the exterior beauty of the mobile terminal by preventing the electrode part 3c from being externally exposed, it may be disadvantageous in that a bezel area BZ2, from which a view area (VA) is removed, can not be formed wide on the lateral side part of the window panel 1.

In the following description, a mobile terminal according to the present invention for extending the view area VA of the display panel 5 by minimizing the bezel areas BZ1 and BZ2 is explained in detail. In particular, a mobile terminal capable of extending a view area of a display panel by minimizing a bezel area according to the present invention is described in detail as follows.

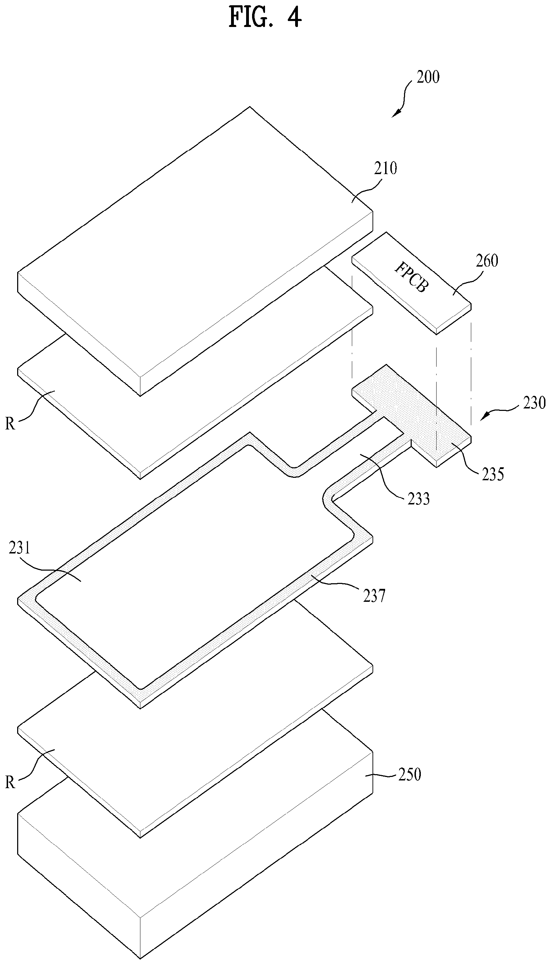

FIG. 4 is an exploded perspective diagram of a display unit according to the present invention.

Referring to FIG. 4, a display unit 200 of a mobile terminal according to the present invention may include a window panel 210 configured to be externally exposed, a touch panel 230 arranged under the window panel 210, and a display panel 250 arranged under the touch panel 230 to output visual information of the mobile terminal in direction of the window panel 210.

The window panel 210 and the touch panel 230 may be attached together via a light-transmittive resin R and/or the touch panel 230 and the display panel 250 may be attached together via the light-transmittive resin R.

The touch panel 230 may include a touch part 231 configured to receive an input of a user, a connecting part 233 extending from a front or rear side part of the touch part 231, a bonding part 235 connected to an end portion of the connecting part 233 to have an FPCB 260 attached thereto, and an electrode part 237 provided to an edge of the touch part 231 to output an input signal received by the touch part 231 to the FPCB 260. In this instance, if the electrode part 237 is included in a view area (VA), it may deteriorate the exterior beauty of the mobile terminal. Therefore, the electrode part 237 needs to avoid being externally exposed from the window panel 210 to a bezel area (BZ). This becomes one of the reasons for reducing the view area (VA) in the window panel 210.

The connecting part 233 of the touch panel 230, which will be described in detail with reference to the accompanying drawings later, is bent to enclose the display panel 250, whereby the bonding part 235 to have the FPCB 260 embedded thereon is situated under the display panel 250 or the front case 101. In addition, one portion of the electrode part 237 may be bent to be arranged at a lateral side of the display panel 250.

The touch panel 230 includes a flexible transparent conducting film. In particular, the flexible transparent conducting film is formed in a manner of coating a top surface of a polymer (or plastic) base material having good flexibility with conducting polymer (e.g., polythiophene, polyaniline, polypyrrole, etc.) or carbon nanotube. The touch panel 230 formed of the aforementioned material has good conductance and good mechanical strength against bending, thereby being freely processed by bending or curving.

The display panel 250 may include an LCD panel and a backlight unit configured to supply light to the LCD panel or may include an OLED panel, which is just exemplary and by which the present invention may be non-limited.

A mobile terminal according to the present invention described in the following may include a window panel 210, a touch panel 230 attached to a bottom of the window panel 210 via a light-transmittive resin (R), the touch panel 230 including a flexible transparent conducting film, a display panel 250 provided under the touch panel 230 to output visual information in direction of the window panel 210, and a front case configured to receive and support the window panel 210, the touch panel 230 and the display panel 250. In addition, at least one portion of the touch panel 230 is received in the front case 101 by being bent. Thus, if the touch panel 230 including the flexible transparent conducting film is arranged within the front case 101 in a manner of at least one portion of the touch panel 230 is bent, it is able to minimize a bezel area BZ2' and to extend a view area (VA).

The following description shall be made in a manner that the window panel 210, the touch panel 230 and the display panel 250 received in the front case 101 are divided into a front side part, a rear side part and a lateral side part.

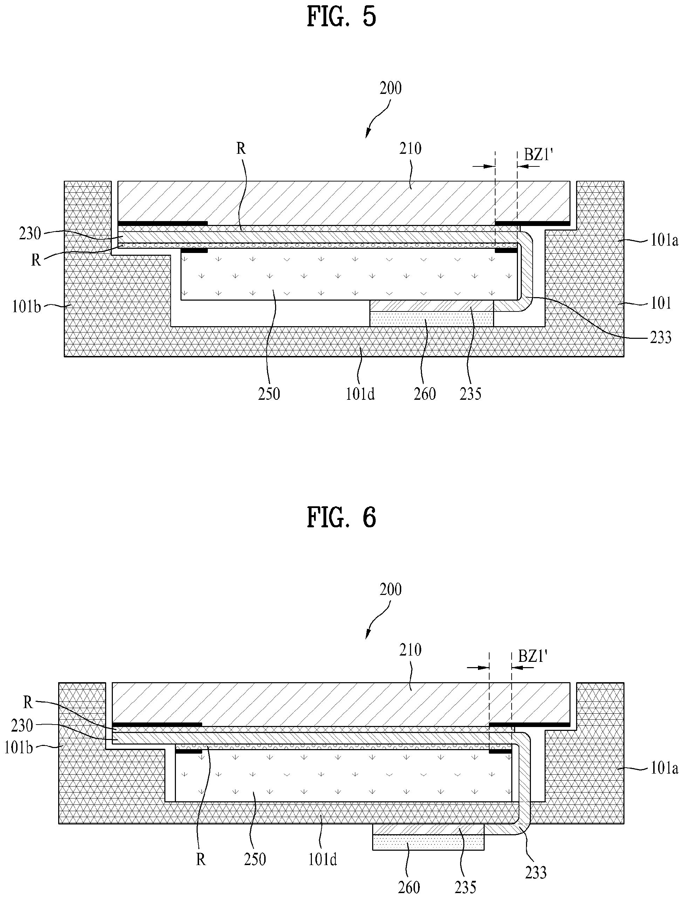

FIG. 5 is a schematic cross-sectional diagram of a front part or a rear part of a touch panel 230 according to a 1^{st} embodiment of the present invention.

Referring to FIG. 5, within a front case 101 of a mobile terminal, a window panel 210, a touch panel 230 attached to a bottom of the window panel 210 via a light-transmittive resin R, and a display panel 250 attached to a bottom of the touch panel 230 via a light-transmittive resin R or placed under the touch panel 230 by being spaced apart from the touch panel 230 via a spacer in a prescribed distance are stacked in order.

In particular, the front case 101 includes a front side part 101a, a rear side part 101b, a lateral side part 101c configured vertical to each of the front side part 101a and the rear side part 101b, and a base part 101d connecting the front side part 101a, the rear side part 101b and the lateral side part 101c together by having a body main board and/or a rear case provided under.

The touch panel 230 of the 1^{st} embodiment of the present invention includes a touch part 231 configured to receive a user input, a connecting part 233 extending from a front or rear side part of the touch part 231, and a bonding part 235 connected to an end portion of the connecting part 233 to have an FPCB 260 attached thereto. In this instance, the connecting part 233 is arranged next to an inner lateral side of the front side part 101a or the rear side part 101b of the front case 101 in a manner of being bent twice to enclose a lateral side of the front side part of the display panel 250. In particular, the connecting part 233 shown in FIG. 5 is arranged to enclose the lateral side of the front side part of the display panel in shape of ' 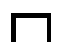 '.

In doing so, 2 bent portions of the connecting part 233 may be preferably formed in a rounded shape. If the bent portion is fully bent to form a corner, although the touch panel 230 includes the flexible transparent conducting film, it may cause a problem that conductance of the touch panel 230 may be degraded or lost. Hence, the bent portions can be rounded to prevent this problem.

The bonding part 235 of the 1^{st} embodiment of the present invention is situated under a panel of the display unit 200 (and over the base part 101d of the front case 101) as the connecting part 233 is arranged by being bent twice to enclose the lateral side and the bottom side of the display panel 250. Since the boding part 235 is able to form a flat bonding area by being provided under the display panel 250, the bonding part 235 enables the FPCB 260 to be stably attached to the touch panel 230.

Thus, according to the 1^{st} embodiment of the present invention, the bonding part 235 is placed under the panel of the display unit 200 by bending the connecting part 233 of the touch panel 230. Therefore, a view area (VA) can be extended by minimizing a bezel area BZ1' due to the bonding area and a space for stably installing the FPCB 260 can be secured with ease.

FIG. 6 is a schematic cross-sectional diagram of a front part or a rear part of a touch panel according to a 2^{nd} embodiment of the present invention.

Referring to FIG. 6, within a front case 101 of a mobile terminal, a window panel 210, a touch panel 230 attached to a bottom of the window panel 210 via a light-transmittive resin R, and a display panel 250 attached to a bottom of the touch panel 230 via a light-transmittive resin R or placed under the touch panel 230 by being spaced apart from the touch panel 230 via a spacer in a prescribed distance are stacked in order.

In particular, the front case 101 includes a front side part 101a, a rear side part 101b, a lateral side part 101c configured vertical to each of the front side part 101a and the rear side part 101b, and a base part 101d connecting the front side part 101a, the rear side part 101b and the lateral side part 101c together by having a body main board and/or a rear case provided under. According to the present embodiment, since a perforating hole is formed at the base part 101d of the front case 101, as mentioned in the following description, the connecting part 233 enters the perforating hole to be placed under the base part 10d of the front case 101.

The touch panel 230 of the 2^{nd} embodiment of the present invention includes a touch part 231 configured to receive a user input, a connecting part 233 extending from a front or rear side part of the touch part 231, and a bonding part 235 connected to an end portion of the connecting part 233 to have an FPCB 260 attached thereto. In this instance, the connecting part 233 is arranged next to an inner lateral side of the front side part 101a or the rear side part 101b of the front case 101 in a manner of being bent twice to enclose a lateral side of the front side part of the display panel 250 and the perforating hole of the front case 101. In particular, the connecting part 233 shown in FIG. 6 is arranged to enclose the lateral side of the front side part of the display panel in shape of ' 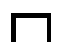 '.

In doing so, 2 bent portions of the connecting part 233 may be preferably formed in a rounded shape. If the bent portion is fully bent to form a corner, although the touch panel 230 includes the flexible transparent conducting film, it may cause a problem that conductance of the touch panel 230 may be degraded or lost. Hence, the bent portions can be rounded to prevent this problem.

The bonding part 235 of the 2^{nd} embodiment of the present invention is situated under the base part 101d of the front case 101 as the connecting part 233 is arranged by being bent twice to enclose the lateral side of the display panel 250, the base part 101d of the front case 101 and a bottom side of the base part 101d of the front case 101. Since the boding part 235 is able to form a flat bonding area by being provided under the base part 101d of the front case 101, the bonding part 235 enables the FPCB 260 to be stably attached to the touch panel 230.

Thus, the bonding part 235 is placed under the base part 101d of the front case 101 by bending the connecting part 233 of the touch panel 230. Therefore, a view area (VA) can be extended by minimizing a bezel area BZ1' due to the bonding area and a space for stably installing the FPCB 260 can be secured with ease.

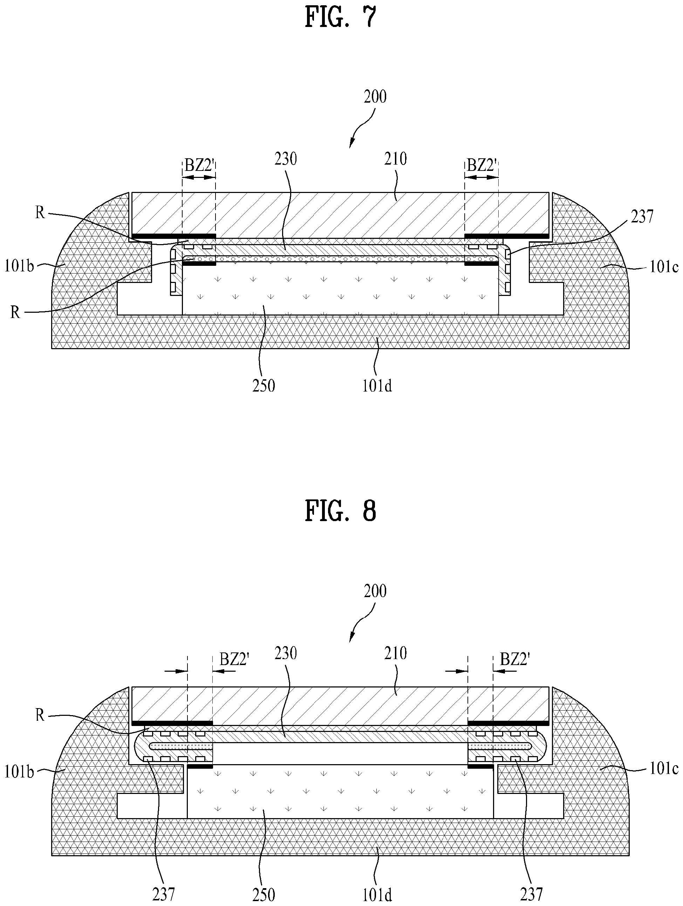

FIG. 7 is a schematic cross-sectional diagram of a lateral side part of a touch panel according to a 1^{st} embodiment of the present invention.

Referring to FIG. 7, within a front case 101 of a mobile terminal, a window panel 210, a touch panel 230 attached to a bottom of the window panel 210 via a light-transmittive resin R, and a display panel 250 attached to a bottom of the touch panel 230 via a light-transmittive resin R or placed under the touch panel 230 by being spaced apart from the touch panel 230 via a spacer in a prescribed distance are stacked in order.

In particular, the front case 101 includes a front side part 101a, a rear side part 101b, a lateral side part 101c configured vertical to each of the front side part 101a and the rear side part 101b, and a base part 101d connecting the front side part 101a, the rear side part 101b and the lateral side part 101c together by having a body main board and/or a rear case provided under.

The touch panel 230 includes a touch part 231 configured to receive a user input, a connecting part 233 extending from a front or rear side part of the touch part 231, a bonding part 235 connected to an end portion of the connecting part 233 to have an FPCB 260 attached thereto, and an electrode part 237 provided to an edge of the touch part 231 to output an input signal received by the touch part 231 to the FPCB 260.

In this instance, a portion of the electrode part 237 provided to the lateral side part of the touch panel 230 is bent to be arranged at a lateral side of the display unit 200. In particular, a portion of the electrode part 237 is bent to be arranged between the lateral side of the display unit 200 and the lateral side part 101c of the front case 101.

In doing so, the bent portion of the electrode part 237 may be preferably formed in a rounded shape. If the bent portion is fully bent to form a corner, although the touch panel 230 includes the flexible transparent conducting film, it may cause a problem that conductance of the touch panel 230 may be degraded or lost. Hence, the bent portion can be rounded to prevent this problem.

Thus, since one portion of the electrode part 237 provided to the lateral side part of the touch panel 230 is bent, a bezel area BZ2' configured to reduce a view area (VA) on the lateral side part of the window panel 210 can be minimized, whereby a view area (VA) can be extended. According to this specification, it is described that one portion of the electrode part 237 provided to the lateral side part of the touch panel 230 is bent only, which is just exemplary and by which the present invention is non-limited. In addition, it is apparent that one portion of the electrode part 237 provided to the front side part and/or the rear side part of the touch panel 230 can be arranged by being bent within the front case 101.

FIG. 8 is a schematic cross-sectional diagram of a lateral side part of a touch panel according to a 2^{nd} embodiment of the present invention.

Referring to FIG. 8, within a front case 101 of a mobile terminal, a window panel 210, a touch panel 230 attached to a bottom of the window panel 210 via a light-transmittive resin R, and a display panel 250 attached to a bottom of the touch panel 230 via a light-transmittive resin R or placed under the touch panel 230 by being spaced apart from the touch panel 230 via a spacer in a prescribed distance are stacked in order.

In particular, the front case 101 includes a front side part 101a, a rear side part 101b, a lateral side part 101c configured vertical to each of the front side part 101a and the rear side part 101b, and a base part 101d connecting the front side part 101a, the rear side part 101b and the lateral side part 101c together by having a body main board and/or a rear case provided under.

The touch panel 230 includes a touch part 231 configured to receive a user input, a connecting part 233 extending from a front or rear side part of the touch part 231, a bonding part 235 connected to an end portion of the connecting part 233 to have an FPCB 260 attached thereto, and an electrode part 237 provided to an edge of the touch part 231 to output an input signal received by the touch part 231 to the FPCB 260.

In this instance, referring to FIG. 8, a portion of the electrode part 237 provided to the lateral side part of the touch panel 230 is bent twice to be arranged in parallel with the rest of the electrode part 237. In particular, the rest of the electrode part 237 extending from the touch part 231 is situated under the window panel 210 and one portion of the electrode part 237 extending from the rest of the electrode part 237 is situated in parallel with the rest of the electrode 237 by being bent twice. Hence, the electrode part 237 provided to the lateral side part of the touch panel 230 has a shape similar to a shape of 'U' overall.

In doing so, the twice-bent bent portion of the electrode part 237 may be preferably formed in a rounded shape. If the bent portion is fully bent to form a corner, although the touch panel 230 includes the flexible transparent conducting film, it may cause a problem that conductance of the touch panel 230 may be degraded or lost. Hence, the bent portion can be rounded to prevent this problem.

Moreover, in order to prevent the electrode part 237 from forming the corner by being fully bent, a space between one portion of the electrode part 237 and the rest of the electrode part 237 may be charged with an adhesive resin or the space in-between may be provided with a spacer.

Thus, since one portion of the electrode part 237 provided to the lateral side part of the touch panel 230 is bent twice, a bezel area BZ2' configured to reduce a view area (VA) on the lateral side part of the window panel 210 can be minimized, whereby a view area (VA) can be extended. According to this specification, it is described that one portion of the electrode part 237 provided to the lateral side part of the touch panel 230 is arranged by being bent twice, which is just exemplary and by which the present invention is non-limited. In addition, it is apparent that one portion of the electrode part 237 provided to the front side part and/or the rear side part of the touch panel 230 can be arranged by being bent twice within the front case 101.

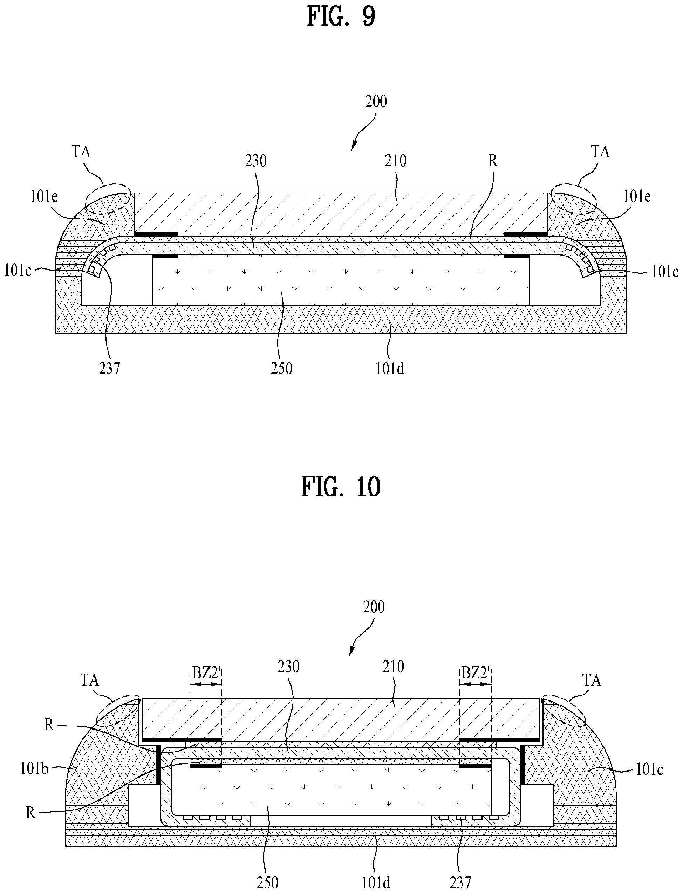

FIG. 9 is a schematic cross-sectional diagram of an additional touch area (TA) according to a 1^{st} embodiment of the present invention. In particular, FIG. 9 schematically shows a lateral side part 101c of a front case 101 and a lateral side part of a touch panel.

Referring to FIG. 9, a mobile terminal according to the present invention may include a window panel 210, a touch panel 230 attached to a bottom of the window panel 210 via a light-transmittive resin (R), the touch panel 230 including a flexible transparent conducting film, a display panel 250 provided under the touch panel 230 to output visual information in direction of the window panel 210, and a front case configured to receive and support the window panel 210, the touch panel 230 and the display panel 250. In addition, at least one portion of the touch panel 230 is received in the front case 101 by being bent. Moreover, an additional touch area (TA) is formed at a lateral side part 101c of the front case 101 to receive a user input signal.

In particular, the front case 101 includes a front side part 101a, a rear side part 101b, a lateral side part 101c configured vertical to each of the front side part 101a and the rear side part 101b, and a base part 101d connecting the front side part 101a, the rear side part 101b and the lateral side part 101c together by having a body main board and/or a rear case provided under. The lateral side part 101c of the front case 101 includes an extending part 101e configured in direction of an inside of the front case 101. At least one portion of the extending part 101e forms an additional touch area (TA) for receiving a user input signal. One portion of the touch panel 230 is provided under the extending part 101e or the additional touch area (TA). Preferably, the extending part 101e may be formed in an arc shape.

The touch panel 230 may include a touch part 231 configured to receive a user input, a connecting part 233 extending from a front or rear side part of the touch part 231, a bonding part 235 connected to an end portion of the connecting part 233 to have an FPCB 260 attached thereto, and an electrode part 237 formed on an edge of the touch part 231 to output an input signal received by the touch part 231 to the FPCB 260. In this instance, as shown in FIG. 9, the touch part 231 is attached to the bottom of the window panel 210 and at least one portion of the extending part 101e via a light-transmittive resin (R). As the touch part 231 is arranged under the at least one portion of the extending part 101e, it may be able to form an additional touch area (TA).

In this instance, a portion of the touch part 231 attached to the at least one portion of the extending part 101e is attached in a manner of being bent along an inner lateral side of the extending part 101e provided to the lateral side part 101c of the front case 101. In addition, the electrode part 237 extending from the touch part 231 is arranged on an inner lateral side of the rest of the extending part 101e or the front case 101 in a manner of being bent.

FIG. 10 is a schematic cross-sectional diagram of an additional touch area (TA) according to a 2^{nd} embodiment of the present invention. In particular, FIG. 10 schematically shows a lateral side part 101c of a front case 101 and a lateral side part of a touch panel.

Referring to FIG. 10, a mobile terminal according to the present invention may include a window panel 210, a touch panel 230 attached to a bottom of the window panel 210 via a light-transmittive resin (R), the touch panel 230 including a flexible transparent conducting film, a display panel 250 provided under the touch panel 230 to output visual information in direction of the window panel 210, and a front case configured to receive and support the window panel 210, the touch panel 230 and the display panel 250. In addition, at least one portion of the touch panel 230 is received in the front case 101 by being bent. Moreover, an additional touch area (TA) is formed at a lateral side part 101c of the front case 101 to receive a user input signal.

In this instance, the touch panel 230 includes a touch part 231 configured to receive a user input signal and an electrode part 237 configured to transmit the user input signal to the FPCB. In addition, one portion of a lateral side part of the touch part 231 may be bent to be arranged on a lateral side of the display panel 250.

Referring to FIG. 7 and FIG. 10, the lateral side part of the touch part 231 of the touch panel 230 of the present embodiment is bent to be arranged on the lateral side of the display panel 250, whereas one portion of the electrode part 237 of the touch panel 230 is bent to be arranged on the lateral side of the display panel 250 in FIG. 7. The electrode part 237 provided to the edge of the touch part 231 may be arranged on the lateral side of the display panel 250 to may be bent to be provided under the display panel 250. Therefore, the additional touch area (TA) can be formed on at least one portion of the lateral side part 101c of the front case 101.

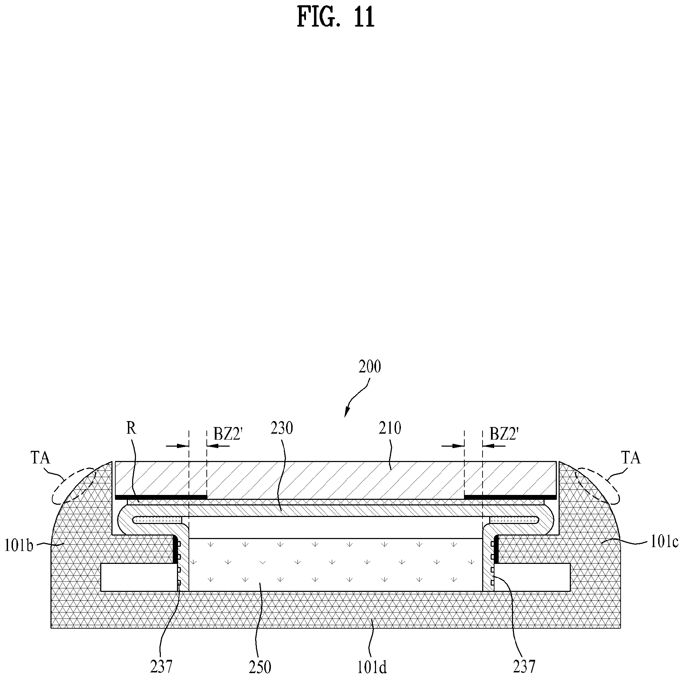

FIG. 11 is a schematic cross-sectional diagram of an additional touch area (TA) according to a 3^{rd} embodiment of the present invention. In particular, FIG. 11 schematically shows a lateral side part 101c of a front case 101 and a lateral side part of a touch panel.

Referring to FIG. 11, a mobile terminal according to the present invention may include a window panel 210, a touch panel 230 attached to a bottom of the window panel 210 via a light-transmittive resin (R), the touch panel 230 including a flexible transparent conducting film, a display panel 250 provided under the touch panel 230 to output visual information in direction of the window panel 210, and a front case configured to receive and support the window panel 210, the touch panel 230 and the display panel 250. In addition, at least one portion of the touch panel 230 is received in the front case 101 by being bent. Moreover, an additional touch area (TA) is formed at a lateral side part 101c of the front case 101 to receive a user input signal.

In this instance, one portion of the touch part 231 of the touch panel 230 (i.e., one portion off the lateral side part of the touch part) may be bent twice to be arranged in parallel with the rest of the touch part 231 (i.e., the rest of the lateral side part of the touch part). In this instance, the electrode part 237 provided to an edge of the touch part 231 may be bent to be arranged on a lateral side of the display panel 250.

Referring to FIG. 8 and FIG. 11, FIG. 8 shows that one portion of the electrode part 237 is bent twice to be in parallel with the rest of the electrode 237. Yet, according to the present embodiment, the lateral side part of the touch part 231 of the touch panel 230 is bent twice to enable one portion of the lateral side part of the touch part 231 to be arranged in parallel with the rest of the touch part 231 and the electrode part 237 provided to the lateral side part of the touch part 231 is bent one more time to be arranged between the lateral side of the display panel 250 and the lateral side part 101c of the front case 101 or under the display unit 250. Therefore, an additional touch area (TA) can be formed on the lateral side part 101c of the front case 101 and a bezel area BZ2' can be minimized in a manner that the electrode part 237 is arranged on the lateral side of the display panel 250 or under the display panel 250 by being bent one more time. Preferably, when the electrode part 237 is arranged on the lateral side of the display panel 250 or under the display panel 250, the electrode part 237 may be attached thereto via an adhesive resin.

Preferably, the additional touch area TA may be activated or deactivated in accordance with a preset user input signal. In particular, if a user does not need the additional touch area, the user deactivates the additional touch area and then inputs an input signal using a touch to the window panel only.

In the following description, the workings and effects of the present invention are explained with reference to the accompanying drawings based on differences from those of the related art mobile terminal.

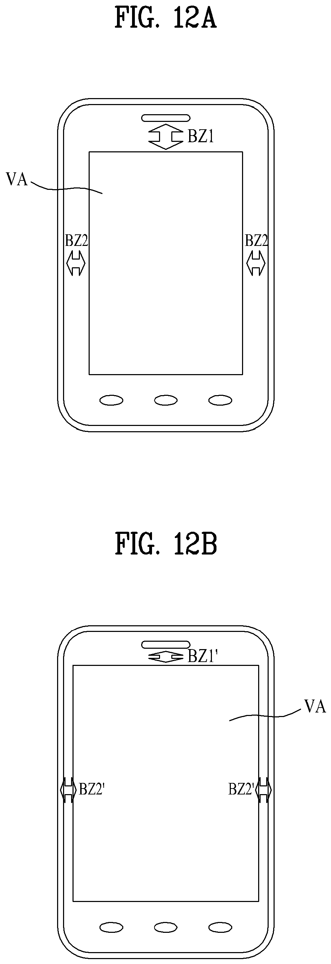

FIG. 12A and FIG. 12B are schematic diagrams for illustrating a size difference between a bezel area of a display unit in a related art mobile terminal and a bezel area (BZ) of a display unit 200 in a mobile terminal according to the present invention. FIG. 12A shows a size of a bezel area BZ1/BZ2 of a mobile terminal according to a related art and FIG. 12B shows a size of a bezel area BZ1'/BZ2' of a mobile terminal according to the present invention.

Referring to FIG. 12A, since the touch panel of the related art mobile terminal is formed of an ITO film having high brittleness and low flexibility, it is difficult to bend the touch panel. Hence, in order to form a bonding area for stable installation of the FPCB 260 on a top surface of the touch panel, a bezel area BZ1 needs to be formed wide on the front or rear side part of the touch panel. Moreover, the electrode part 237 of the touch panel is arranged under the lateral side part of the window panel 210 and needs a wide bezel area BZ2 to avoid being externally exposed. Therefore, in the related art mobile terminal, a view area (VA) for delivering visual information to a viewer substantially is reduced due to the bezel area BZ1/BZ2.

On the contrary, referring to FIG. 12B, since the touch panel of the mobile terminal according to the present invention includes the flexible transparent conducting film having high mechanical strength against the bending owing to its high flexibility, the bonding area for stably installing the FPCB 260 can be provided under the panel of the display unit 220 or the base part 101d of the front case 101 and a size of the electrode part 237 exposed externally can be also minimized by bending at least one portion of the electrode part 237 provided to the lateral side of the touch part 231. Therefore, the present invention minimizes the bezel area BZ1'/BZ2' smaller than that of the related art mobile terminal, thereby extending a view area (VA).

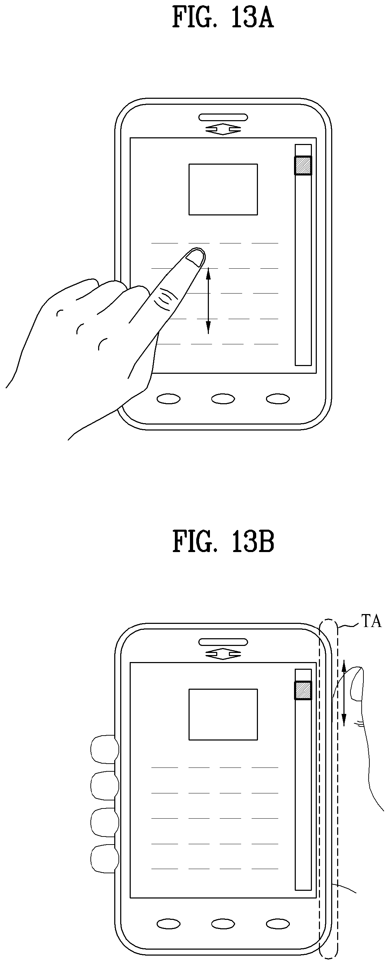

FIG. 13A and FIG. 13B are schematic diagrams for illustrating a difference between a touch scheme via a touch panel in a related art mobile terminal and a touch scheme via a touch panel 230 in a mobile terminal according to the present invention.

Referring to FIG. 13A, in the related art mobile terminal, as the touch part 231 of the touch panel is arranged under the window panel 210 only, the touch area for receiving a user input signal is limited to the surface of the window panel 210.

On the contrary, referring to FIG. 13B, in the mobile terminal according to the present invention, as the touch part 231 is provided to the lateral side part 101c or the extending part 101e of the front case 101 as well as under the window panel 210, the touch area for receiving a user input signal is provided to the surface of the window panel 210 and an additional touch area (TA) can be provided to the lateral side part 101c of the front case 101 as well.

Therefore, when output data is viewed in the mobile terminal by being scrolled for example, it is inconvenient for a user to view the output data in the related art mobile terminal in a manner of scrolling a surface of the window panel 210 with one hand to scroll the output data while the mobile terminal body is held with the other hand. Yet, the mobile terminal according to the present invention enhances use's convenience in controlling output data to be scrolled in a manner of holding the body of the mobile terminal with a specific hand and scrolling the lateral side part 101c of the front case 101 with a finger of the specific hand. The aforementioned scroll control is just one example of a function of the additional touch area (TA), by which the present invention is non-limited.

The mobile terminal 100 described above is applicable, not limited to the configuration and method described in the embodiments, but to some or entire combinations of the embodiments such that various modifications are made available.

## Claims

1. A mobile terminal comprising:
a window panel (210);
a touch panel (230) attached to a bottom of the window panel via a light-transmittive resin, the touch panel including a flexible transparent conducting film and having at least one bent portion bending away from the window panel;
a display panel (250) provided under the touch panel and configured to output visual information in a direction of the window panel;
a front case (101) configured to receive and support the window panel, the touch panel and the display panel,
wherein the front case comprises:
a front side part;
a rear side part;
lateral side parts configured vertical to each of the front side part and the rear side part; and
a base part connecting the front side part, the rear side part and the lateral side part together, a body main board and a rear case being provided under the base part,
wherein the touch panel comprises:
a touch part (231) configured to receive an input signal;
a connecting part (233) extending from a front or a rear side part of the touch part and bent toward to the rear side of the display panel (250);
a bonding part (235) connecting between an end of the connecting part and an Flexible Printed Circuit Board, FPCB (260) and provided under the panel of the display unit (151) or the base part (101d) of the front case (101); and
an electrode part (237) provided to an edge of the touch part (231) and configured to output the input signal received by the touch part to Flexible Printed Circuit Board, FPCB,
wherein portions of the electrode part provided to both lateral side parts of the touch panel are bent twice to be arranged in parallel with a respective rest of the
electrode part, and
wherein a space between each of the portions of the electrode part and the respective rest of the electrode part is charged with an adhesive resin or a spacer.

2. The mobile terminal of claim 1, wherein the connecting part (233) of the touch panel is bent twice next to an inner lateral side of the front side part or the rear side part of the front case to enclose a lateral side of the front side part of the display panel.

3. The mobile terminal of claim 1 or 2, wherein the bonding part is provided under the display panel or under the base part of the front case.

## Patentansprüche

1. Mobiles Endgerät, das aufweist:
eine Fensterplatte (210);
eine berührungsempfindliche Platte (230), die an einer Unterseite der Fensterplatte über ein Licht übertragendes Kunstharz befestigt ist, wobei die berührungsempfindliche Platte eine flexible transparente leitfähige Folie enthält und wenigstens einen gebogenen Abschnitt hat, der von der Fensterplatte weggebogen ist;
ein Anzeigeplatte (250), die unter der berührungsempfindlichen Platte vorgesehen ist und dazu ausgestaltet ist, visuelle Informationen in einer Richtung der Fensterplatte auszugeben;
ein vorderes Gehäuse (101), das dazu ausgestaltet ist, die Fensterplatte, die berührungsempfindliche Platte und die Anzeigeplatte aufzunehmen und zu halten,
wobei das vordere Gehäuse aufweist:
ein vorderes Seitenteil;
ein hinteres Seitenteil;
seitliche Seitenteile, die vertikal zu einem jeden von dem vorderen Seitenteil und dem hinteren Seitenteil ausgestaltet sind; und
ein Basisteil, das das vordere Seitenteil, das hintere Seitenteil und das seitliche Seitenteil miteinander verbindet, wobei eine Körperhauptplatine und ein hinteres Gehäuse unter dem Basisteil vorgesehen sind,
wobei die berührungsempfindliche Platte aufweist:
ein berührungsempfindliches Teil (231), das dazu ausgestaltet ist, ein Eingabesignal zu empfangen;
ein Verbindungsteil (233), das sich von einem vorderen Seitenteil oder einem hinteren Seitenteil des berührungsempfindlichen Teils erstreckt und in Richtung der Rückseite des Anzeigeplatte (250) gebogen ist;
ein Klebebindungsteil (235), das zwischen einem Ende des Verbindungsteils und einer flexiblen gedruckten Leiterplatte (FPCB, Flexible Printed Circuit Board) (260) eine Verbindung herstellt und unter der Platte der Anzeigeeinheit (151) oder dem Basisteil (101d) des vorderen Gehäuses (101) vorgesehen ist; und
ein Elektrodenteil (237), das an einer Kante des berührungsempfindlichen Teils (231) vorgesehen ist und dazu ausgestaltet ist, das von dem berührungsempfindlichen Teil empfangene Signal an die flexible gedruckte Leiterplatte, FPCB, auszugeben,
wobei Abschnitte des elektronischen Teils, die an beiden Seitenteilen der berührungsempfindlichen Platte vorgesehen sind, zweimal gebogen sind, um parallel zu einem entsprechenden Rest des Elektrodenteils angeordnet zu sein, und wobei ein Raum zwischen einem jeden der Abschnitte von dem Elektrodenteil und dem entsprechenden Rest des Elektrodenteils mit einem Kunstharzkleber oder einem Abstandselement gefüllt ist.

2. Mobiles Endgerät nach Anspruch 1, wobei das Verbindungsteil (233) der berührungsempfindlichen Platte zweimal angrenzend an eine seitliche Innenseite des vorderen Seitenteils oder des hinteren Seitenteils des vorderen Gehäuses gebogen ist, um eine seitliche Seite von dem vorderen Seitenteil der Anzeigeplatte zu umschließen.

3. Mobiles Endgerät nach Anspruch 1 oder 2, wobei das Klebebindungsteil unter der Anzeigeplatte oder unter dem Basisteil des vorderen Gehäuses vorgesehen ist.

## Revendications

1. Terminal mobile comprenant :
un panneau de fenêtre (210) ;
un panneau tactile (230) fixé à un dessous du panneau de fenêtre via une résine transmettant la lumière, le panneau tactile comportant un film conducteur transparent flexible et ayant au moins une portion fléchie fléchissant en éloignement du panneau de fenêtre ;
un panneau d'affichage (250) prévu sous le panneau tactile et configuré pour fournir en sortie des informations visuelles dans une direction du panneau de fenêtre ;
un boîtier avant (101) configuré pour recevoir et soutenir le panneau de fenêtre, le panneau tactile et le panneau d'affichage,
dans lequel le boîtier avant comprend :
une partie de face avant ;
une partie de face arrière ;
des parties de côté latéral configurées verticales par rapport à chacune de la partie de face avant et de la partie de face arrière ; et
une partie de base raccordant la partie de face avant, la partie de face arrière et la partie de côté latéral ensemble, une carte mère de corps et un boîtier arrière étant prévus sous la partie de base,
dans lequel le panneau tactile comprend :
une partie tactile (231) configurée pour recevoir un signal d'entrée ;
une partie de raccordement (233) s'étendant depuis une partie de face avant ou arrière de la partie tactile et fléchie vers le côté arrière du panneau d'affichage (250) ;
une partie de liaison (235) raccordant une extrémité de la partie de raccordement et une carte de circuit imprimé flexible, FPCB (260) et prévue sous l'écran de l'unité d'affichage (151) ou la partie de base (101d) du boîtier avant (101) ; et
une partie d'électrode (237) prévue sur un bord de la partie tactile (231) et configurée pour fournir en sortie le signal d'entrée reçu par la partie tactile à la carte de circuit imprimé flexible, FPCB,
dans lequel des portions de la partie d'électrode prévues sur les deux parties de côté latéral du panneau tactile sont fléchies deux fois pour être agencées en parallèle avec une partie restante respective de la partie d'électrode, et
dans lequel un espace entre chacune des portions de la partie d'électrode et la partie restante respective de la partie d'électrode est chargé d'une résine adhésive ou d'un espaceur.

2. Terminal mobile selon la revendication 1, dans lequel la partie de raccordement (233) du panneau tactile est fléchie deux fois près d'un côté latéral intérieur de la partie de face avant ou de la partie de face arrière du boîtier avant pour renfermer un côté latéral de la partie de face avant du panneau d'affichage.

3. Terminal mobile selon la revendication 1 ou 2, dans lequel la partie de liaison est prévue sous le panneau d'affichage ou sous la partie de base du boîtier avant.
